# EUROPEAN PATENT APPLICATION

(11) **EP 0 905 510 A1**
(43) Date of publication of application: **31.03.1999**
(21) Application number: 97402277.4
(22) Date of filing: 30.09.1997
(51) Int. Cl.: G01N 25/68

(54) **A Peltier-effect condensation detector**

(71) Applicant: IMRA EUROPE S.A., F-06560 Valbonne (FR)
(72) Inventor: Ancey, Pascal, 06130 Grasse (FR); Gschwind, Michel, 06130 Plascassier (FR); Fontaine, Jean-Pierre, 06600 Antibes (FR); Ishihara, Kunio, 06600 Antibes (FR)
(74) Representative: Leszczynski, André

(57) **Abstract**

A detector device comprising a Peltier effect thermoelectric module for cooling or heating a detection surface, current control means for controlling the current fed to said thermoelectric module so as to cause the temperature of said detection surface to oscillate, and analysis means for responding to the appearance of the temperature oscillations of the detection surface to detect energy transfer thereon.

The thermoelectric module (8) is secured to a thermal buffer (9) forming an integral portion of the detector device.

## Description

The present invention relates to a detector device including a Peltier effect thermoelectric module for cooling or heating a detection surface, and to the use of the device in particular for detecting the formation of condensation on the detection surface.

European patent application EP-A-0 613 000 in the name of the Applicant company discloses a detector device of that type, e.g. for the purpose of detecting a risk of mist forming on a vehicle windscreen.

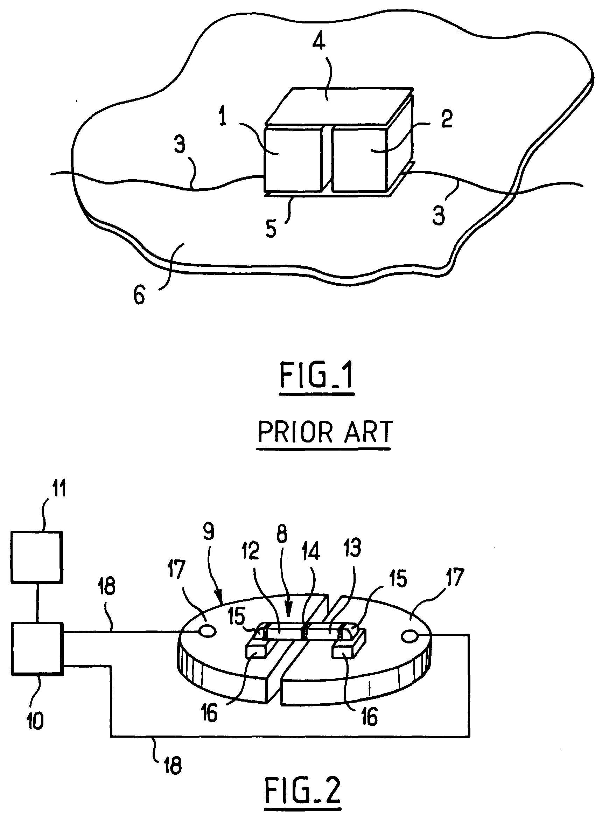

As shown in Figure 1 of the accompanying drawing, that known device comprises two thermoelectric elements 1 and 2 made of semiconductor materials that are respectively N-doped and P-doped, said elements 1 and 2 being connected in series by a plate 4 and being connected by wires 3 to a power supply.

The top face of the plate 4 defines a detection surface whose temperature can vary under the effect of electric current flowing through the thermoelectric elements 1 and 2.

The bases of the thermoelectric elements 1 and 2 are fixed on a support plate 5 which is glued to the surface of the windscreen 6.

By feeding the thermoelectric module with alternating current, the temperature of the detection surface is caused to oscillate about a reference temperature.

To detect a risk of mist forming on the windscreen, the reference temperature is taken to be the temperature of the windscreen, and the detection surface is cooled to below the reference temperature.

There is a risk of mist forming on the windscreen when condensation forms on the detection surface cooled in this way.

In that known device, the windscreen 6 dissipates the heat given off by the thermoelectric module while it is cooling the detection surface.

Nevertheless, such a device does not give complete satisfaction, in particular because the adhesive used to fix the support plate 5 on the windscreen 6 impedes transmission of the heat to be dissipated, so that the thermoelectric module tends to warm up after several thermal cycles.

It then becomes more and more difficult to cool the detection surface to below the initial reference temperature, and as a result that known device is operated with periods during which the thermoelectric module is stopped to leave time for the heat given off by the elements to be removed by the windscreen.

Attempts have been made to improve thermal contact between the thermoelectric module and the windscreen by selecting adhesives that present good thermal conductivity.

Nevertheless, the performance of such known detector devices remains highly dependent on the quality of thermal contact between the thermoelectric module and the windscreen.

An object of the present invention is to provide a novel detector device remedying that drawback in particular.

The detector device of the invention is of the type comprising a Peltier effect thermoelectric module for cooling or heating a detection surface, current control means for controlling the current fed to said thermoelectric module so as to cause the temperature of said detection surface to oscillate, and analysis means for responding to the appearance of the temperature oscillations of the detection surface to detect energy transfer thereon, and it is characterized by the fact that said thermoelectric module is secured to a thermal buffer forming an integral portion of the detector device.

The transfer of energy can be either positive or negative.

Advantageously, the thermal buffer has heat capacity and thermal conductivity selected so that variation in its temperature due to heat exchange with the thermoelectric module is, at least on a portion of its periphery, negligible compared with the amplitude of temperature oscillations at the detection surface.

The thermal buffer is made of copper, for example, or of any other material having similar thermal conductivity.

In an embodiment of the invention, the mass of said thermal buffer lies in the range 0.5 grams (g) to 1 g.

Advantageously, the thermoelectric module and the thermal buffer are integrated in a package leaving part of the thermal buffer apparent, the apparent area of the thermal buffer preferably being greater than or equal to 6 mm².

The package also advantageously includes an opening open to the detection surface, said opening being covered, for example, by a fine-mesh protective grid.

By way of example, the detector device of the invention is used to detect condensation forming on the detection surface.

It is thus possible to use the device to detect a risk of mist forming on the windscreen of a vehicle by fixing the thermal buffer on the windscreen or in the vicinity thereof.

The thermal buffer is secured to the Peltier effect thermoelectric module via thermal contact of good quality, ab initio, i.e. on manufacture of the detector device.

The thermal capacity and the thermal conductivity of the thermal buffer obviate the need to remove the heat produced by the thermoelectric module by means of direct thermal conduction via the windscreen.

This makes it possible to extend the operating period of the detector device during which it is possible to cool the detection surface below the initial reference temperature.

By appropriately selecting the characteristics of thermal capacity and of thermal conductivity of the thermal buffer, it is even possible to ensure that at least a portion of the periphery of the thermal buffer keeps a temperature that is substantially constant.

The temperature oscillations of the detection surface then give rise to practically no exchange of heat between the thermal buffer and its environment, so the oscillations can take place around a reference temperature which remains substantially constant throughout operation of the detector device, which temperature corresponds to the temperature of the environment situated in the immediate vicinity of the thermal buffer.

When the detector device is used to detect a risk of mist forming on a windscreen, this makes it possible to be unaffected by the quality of the thermal contact between the thermal buffer and the windscreen.

Contact quality then has hardly any consequence on the operation of the detector device, unlike known detector devices that make use of the vehicle windscreen as a heat sink.

It is even possible to avoid any contact between the detector device and the windscreen, by establishing radiant coupling between the thermal buffer and the windscreen.

In other words, the thermal buffer then takes up the temperature of the windscreen by means of radiation. This increases the range of locations in which the detection surface can be installed, and makes it possible to protect it from solar radiation.

The advantages and performance of the detector device of the invention also make it possible to use it in other applications.

In particular, the detector device of the invention can be used to determine the content in a gas of a compound capable of condensing on coming into contact with the detection surface while it is being cooled. In this application, advantage is taken of the fact that during operation of the detector device, the thermal buffer conserves a temperature that is substantially constant and equal to the temperature of the gas, and about which the temperature of the detection surface can oscillate.

More particularly, it is possible to use the detector device to determine humidity.

Other characteristics and advantages of the present invention appear on reading the following detailed description of a non-limiting embodiment of a detector device of the invention, and on examining the accompanying drawings, in which:
- Figure 1, described above, shows a portion of a prior art detector device;
- Figure 2 shows a detector device constituting an embodiment of the invention;
- Figures 3 and 4 are two diagrammatic perspective views comprising respectively a view from above and a view from beneath of the package containing the Peltier effect thermoelectric module and its thermal buffer;
- Figure 5 shows the appearance of the temperature oscillations of the detection surface, firstly when no condensation forms thereon and secondly when condensation does form thereon; and
- Figure 6 shows the device implemented for detecting a risk of mist forming on a vehicle windscreen.

The detector device shown in Figure 2 comprises a Peltier effect thermoelectric module 8 mounted on a thermal buffer 9 comprising two half-disks 17, current control means 10 for controlling the current fed to the thermoelectric module 8, and analysis means 11 for analyzing variations in the voltage across the terminals of the module.

In the example described, the thermoelectric module 8 is in the form of a bar made up of an N type semiconductor thermoelectric element 12 and of a P type semiconductor thermoelectric element 13, the elements being united by a conductive junction 14.

By way of example, each element 12 or 13 has its end remote from the other element fixed by means of low temperature BiSn soldering to a current feed and support tab 16 made of a metal that is a good conductor of electricity and of heat, such as copper.

Each tab 16 is soldered via its base onto a corresponding one of the half-disks 17, which disks are also made of a material that is a good conductor of heat and of electricity, such as copper.

The two half-disks 17 are placed with their rectilinear sides parallel and perpendicular to the longitudinal axis of the elements 12 and 13.

Each half-disk 17 is also connected by a conductive wire 18 to the current control means 10.

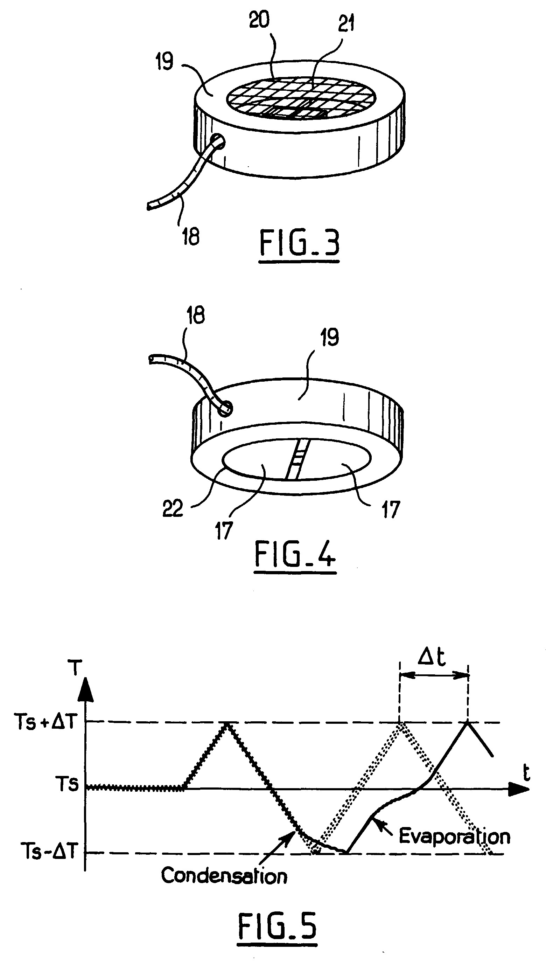

Preferably, as shown in Figures 3 and 4, the thermal buffer 9 and the thermoelectric module 8 are housed in a package 19 of plastics material having a top face which includes an opening 20 provided with a fine mesh protective grid 21 and a bottom face that also includes an opening 22, revealing the bases of the two half-disks 17.

Given the relative fragility of the thermoelectric module 8, the two half-disks 17 are held at constant spacing by a spacer which may be formed by appropriately shaping the inside of the package 19 or by means of a piece of insulating material applied to the half-disks 17.

The junction 14 situated between the two elements 12 and 13 serves as the detection surface.

The current control means 10 deliver an alternating current causing the temperature of the detection surface to oscillate.

Thus, in the absence of external energy transfer, the temperature thereof can be caused to oscillate with a sawtooth waveform between a high temperature Tₛ + ΔT and a low temperature Tₛ - ΔT about a reference temperature Tₛ, as shown by dashed lines on either side of a continuous line in Figure 5.

When condensation forms on the detection surface while it is being cooled, the latent heat of condensation released on said surface by the condensation slows down the cooling thereof, such that for constant electrical power passing through the elements 12 and 13, the detection surface is late in reaching the low temperature Tₛ - ΔT, as shown by the bold line in Figure 5.

While the detection surface is being heated, the latent heat of vaporization absorbed in order to evaporate the condensate retards the rise in temperature of the detection surface, which is therefore late in reaching the high temperature Tₛ + ΔT.

The total delay due to condensation forming on the detection surface in a cycle comprising cooling followed by heating is marked Δt in Figure 5.

The analysis means 11 are designed to detect the appearance of the delay Δt.

The thermal capacity and thermal conductivity of the two half-disks 17 are selected so that given the frequency of temperature oscillation, the temperature at the periphery of each half-disk 17 remains substantially constant, equal to the temperature of the environment located in the immediate vicinity of the thermal buffer 9.

The person skilled in the art can easily calculate the dimensions to be given to the half-disks 17 and such calculations are not described in detail to avoid overburdening the description.

By way of example, the duration of the period during which the detection surface is cooled during one temperature cycle can be less than or equal to 3 seconds (s) and the duration of the period during which the detection surface is heated during one temperature cycle can be less than or equal to 3 s, for example.

Each half-disk 17 damps the amplitude of the temperature oscillations of the thermoelectric module 8 such that the average temperature of each half-disk 17 remains substantially constant and equal to the temperature of the environment situated in its immediate vicinity.

The temperature oscillations of the detection surface take place around this temperature which serves as the reference temperature.

The thermoelectric module 8 and its thermal buffer 9 are optionally integrated in the package 19 or in any other protection and support device, depending on the use which is to be made of the detector device.

If it is to be used for detecting a risk of mist forming, the thermoelectric module 8 and the thermal buffer 9 can be fixed directly to a windscreen.

However, unlike known devices, there is no longer any need to ensure good thermal contact with the windscreen, and indeed there is no need for any contact at all.

Mere contact between the thermal buffer and air whose temperature in the vicinity of the windscreen can be considered as being representative of the temperature of the windscreen, can suffice for making the temperature of the thermal buffer equal to the temperature of the windscreen.

It is also possible to establish radiant coupling between the windscreen and the thermal buffer, with the temperature oscillations of the detection surface taking place about the temperature of the windscreen because of the thermal buffer whose temperature tracks that of the windscreen.

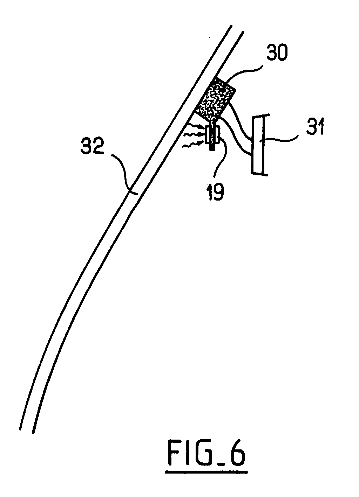

Figure 6 shows the package 19 installed beneath a support 30 for securing a vehicle rearview mirror 31 on a windscreen 32, the support 30 being stuck to the windscreen 32. The package 19 is positioned in such a manner as to provide radiant coupling between the thermal buffer 9 and the windscreen 32. Advantageously, the package 19 is also placed in such a manner as to be protected by the support 30 from direct sunlight.

This disposition has the advantage of the detector device being protected from variations of temperature due to direct solar radiation which could interfere with detection.

The detector device of the invention can also be used to measure humidity.

The thermal buffer 9 tracks the temperature of ambient air so that the temperature of the detection surface can oscillate about a reference temperature that is equal to the temperature of the air.

The opening 22 in the package 19 allows ambient air to circulate in contact with the thermal buffer 9, such that the temperature thereof responds more quickly to variations in the temperature of ambient air.

By determining air temperature and the temperature at which condensation forms on the detection surface, it is possible to calculate the degree of humidity.

Naturally, the invention is not limited to the embodiments and applications described above.

It is thus possible to make the thermal buffer and the thermoelectric module by deposition on a substrate, for example.

The detector device can also be used for determining the content in a gaseous mixture of a compound such as a hydrocarbon.

## Claims

1. A detector device comprising a Peltier effect thermoelectric module for cooling or heating a detection surface, current control means for controlling the current fed to said thermoelectric module so as to cause the temperature of said detection surface to oscillate, and analysis means for responding to the appearance of the temperature oscillations of the detection surface to detect energy transfer thereon, characterized by the fact that said thermoelectric module (8) is secured to a thermal buffer (9) forming an integral portion of the detector device.

2. A device according to claim 1, characterized by the fact that the thermal buffer (9) has heat capacity and thermal conductivity selected so that variation in its temperature due to heat exchange with the thermoelectric module (8) is, at least on a portion of its periphery, negligible compared with the amplitude of temperature oscillations at the detection surface.

3. A detector device according to claim 1, characterized by the fact that said thermal buffer (9) presents mass lying in the range 0.5 grams (g) to 1 g.

4. A detector device according to any one of claims 1 to 3, characterized by the fact that said thermal buffer (9) comprises two half-disks (17) of electrically conductive material.

5. A detector device according to any preceding claim, characterized by the fact that said thermoelectric module (8) comprises an assembly of N-doped and P-doped semiconductor elements in the form of a bar.

6. A device according to any preceding claim, characterized by the fact that the duration of the cooling period of the detection surface during a temperature cycle is less than or equal to three seconds.

7. A detector device according to any preceding claim, characterized by the fact that the duration of the period during which the detection surface is heated during a temperature cycle is less than or equal to three seconds.

8. A device according to any preceding claim, characterized by the fact that the thermoelectric module (8) and the thermal buffer (9) are integrated in a package (19) leaving part of the thermal buffer apparent, the apparent area of the thermal buffer preferably being greater than or equal to 6 mm².

9. A detector device according to any preceding claim, characterized by the fact that the package (19) includes an opening (20) opening to said detection surface and covered by a protective grid (21).

10. A device according to any preceding claim, characterized by the fact that the thermal buffer is shaped to be fixed on or close to a reference surface such as a windscreen, and by the fact that said current control means (10) and said analysis means (11) are organized to detect a risk of mist forming on said reference surface.

11. The use of a detector device according to any preceding claim to detect the formation of condensation on the detection surface.

12. A use according to claim 11, characterized by the fact that the detector device is used to detect a risk of mist forming on a vehicle windscreen, with the thermal buffer being fixed thereon or in the vicinity thereof.

13. A use according to claim 12, characterized by the fact that the detector device does not make contact with the windscreen and that radiant coupling is established between the windscreen and the thermal buffer, the thermal buffer and the detection surface also being disposed in such a manner as to be protected from direct solar radiation.

14. A use according to claim 11, characterized by the fact that said detector device is used to determine the contents in a gas of a compound capable of condensing on coming into contact with the detection surface while it is being cooled.

15. A use according to claim 14, characterized by the fact that said detector device is used to determine a degree of humidity.
